(19) Europäisches Patentamt
European Patent Office
Office européen des brevets

(11) **EP 1 989 087 B1**

(12) **EUROPÄISCHE PATENTSCHRIFT**

(45) Veröffentlichungstag und Bekanntmachung des Hinweises auf die Patenterteilung:
**12.08.2009 Patentblatt 2009/33**

(21) Anmeldenummer: **07722843.5**

(22) Anmeldetag: **19.02.2007**

(51) Int Cl.:
**B60T 8/175** *(2006.01)*    **B60K 28/16** *(2006.01)*

(86) Internationale Anmeldenummer:
**PCT/EP2007/001403**

(87) Internationale Veröffentlichungsnummer:
**WO 2007/096110 (30.08.2007 Gazette 2007/35)**

(54) **VERFAHREN UND VORRICHTUNG ZUR REGELUNG DES ANTRIEBSSCHLUPFES ANGETRIEBENER RÄDER EINES FAHRZEUGS MIT DER MOTORDREHZAHL ALS STELLGRÖSSE**

METHOD AND DEVICE FOR CONTROLLING THE TRACTION SLIP OF THE DRIVEN WHEELS OF A VEHICLE WITH THE ENGINE TORQUE AS A SET PARAMETER

PROCEDE ET DISPOSITIF DE REGULATION DE L'ANTIPATINAGE À L'ACCELERATION DE ROUES ENTRAÎNEES D'UN VEHICULE AUTOMOBILE, À L'AIDE DE LA VITESSE DE ROTATION DU MOTEUR EN TANT QUE GRANDEUR DE REGULATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **20.02.2006 DE 102006007740**

(43) Veröffentlichungstag der Anmeldung:
**12.11.2008 Patentblatt 2008/46**

(73) Patentinhaber: **KNORR-BREMSE Systeme für Nutzfahrzeuge GmbH**
**80809 München (DE)**

(72) Erfinder: **ZIEGLER, Andreas**
**71287 Weissach (DE)**

(74) Vertreter: **Schönmann, Kurt**
**Knorr-Bremse AG**
**Moosacher Strasse 80**
**D-80809 München (DE)**

(56) Entgegenhaltungen:
WO-A-01/28802       DE-A1- 19 644 231
DE-A1- 19 837 521    US-A- 5 119 299

**Beschreibung**

Stand der Technik

Die Erfindung geht aus von einem Verfahren und von einer Vorrichtung zur Regelung des Antriebsschlupfes angetriebener Räder eines Fahrzeugs, gemäß den Oberbegriffen der Ansprüche 1 und 3.

Beim Anfahren oder Beschleunigen hängt die Kraftübertragung vom Schlupf zwischen Reifen und Fahrbahn ab. Diese Abhängigkeit kann in Kraftschluss-Schlupfkurven dargestellt werden. Bei kleinen Schlupfwerten-laufen die Beschleunigungsvorgänge im stabilen Bereich ab, erhöht sich der Schlupf, nimmt auch der nutzbare Kraftschluss, d.h. die Haftreibungszahl zu. Mit zunehmendem Schlupf über das erreichbare Kraftschlussmaximum hinaus wird der instabile Bereich der Schlupfkurve erreicht, weil eine weitere Erhöhung des Schlupfes zu einer Reduzierung des Kraftschlusses führt.

Zur Anpassung des Antriebsschlupfes an zulässige Werte werden Antriebsschlupfregelungen (ASR) eingesetzt, welche zum einen das Antriebsmoment des Antriebsmotors regeln und zusätzlich die Bremsanlage des Fahrzeugs aktivieren. Elektronische Bremssysteme (EBS) von modernen Nutzfahrzeugen, in welche auch ABS-Systeme integriert sind, haben deshalb Bremssteuergeräte mit einem Funktionsteil zur Antriebsschlupfregelung.

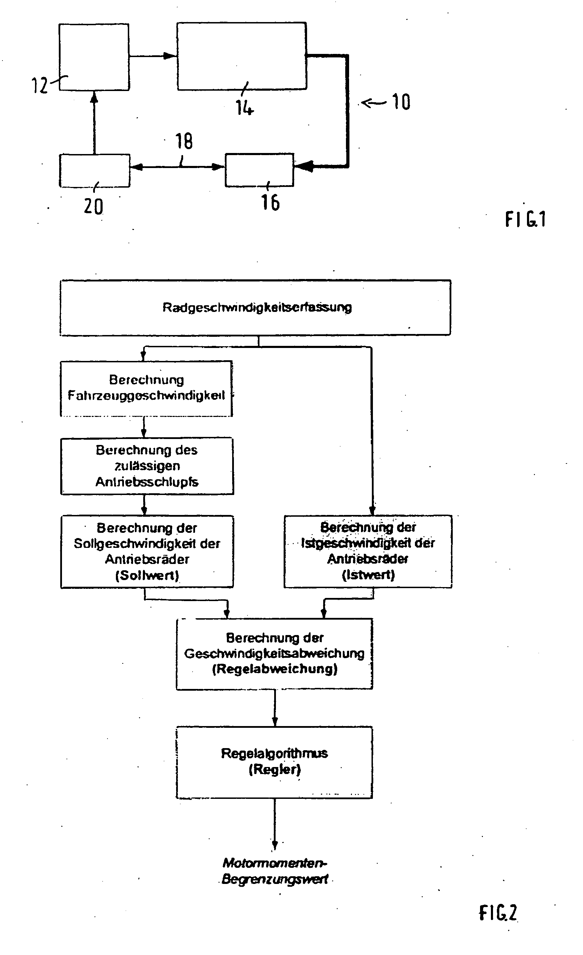

Fig.1 zeigt schematisch den Aufbau eines Regelkreises 10 für die Regelung des Antriebsmoments eines Antriebsmotors 12 eines Nutzfahrzeugs. Dabei werden über Raddrehzahlsensoren die an einem Antriebsstrang 14 endseitig vorhandenen Raddrehzahlen der angetriebenen Räder gemessen und entsprechende Signale in ein Bremssteuergerät 16 mit integriertem Funktionsteil zur Antriebsschlupfregelung ASR eingesteuert. Dieses Bremssteuergerät 16 ist beispielsweise über eine CAN-Schnittstelle 18 nach SAE J1939 mit einem Motorsteuergerät 20 verbunden, welches den Antriebsmotor 12 ansteuert. Über die Schnittstelle 18 kann das Bremsteuergerät 16 dann einen Sollwert für das Antriebsmoment des Antriebsmotors 12 an das Motorsteuergerät 20 liefern.

Fig.2 zeigt den prinzipiellen Aufbau der Regelstruktur der Motormomentregelung innerhalb der Antriebsschlupfregelung. Dabei wird zum einen aus der momentanen Radgeschwindigkeit eines angetriebenen Rades, der momentanen Fahrzeuggeschwindigkeit und einem zulässigen Antriebsschlupf ein Sollwert für die Radgeschwindigkeit berechnet. Dieser Sollwert wird mit dem Istwert der momentanen Radgeschwindigkeit verglichen und die Geschwindigkeitsregelabweichung bestimmt. Abhängig von dieser Geschwindigkeitsregelabweichung errechnet das Bremssteuergerät 16 mit einem elektronischen Regler den Sollwert für das Antriebsmoment des Antriebsmotors 12. Wesentliches Merkmal dieser Regelung ist daher, dass die vom Regler berechnete Stellgröße ein

Sollantriebsmoment für den Antriebsmotor 12 ist, als Eingangsgrößen jedoch die Radgeschwindigkeiten der angetriebenen Räder verwendet werden. Da weitere Regelkreise unterlagert sind, welche das Antriebsmoment des Antriebsmotors 12 beeinflussen, wird diese Sollwertvorgabe im Motorsteuergerät 20 jedoch oft nicht identisch umgesetzt.

In der gattungsbildenden DE 198 37 521 A1 wird ein Verfahren und eine Vorrichtung zur Antriebsschlupfregelung vorgeschlagen, bei welchem im Anfahrbereich von einer Schlupfregelung auf eine Motordrehzahlsollregelung umgeschaltet wirt. Die Schrift enthält aber keine genauen Angaben darüber, wie eine solche Regelung zu realisieren ist.

Zweck des in der WO 01/28802 beschriebenen Verfahrens ist die Vermeidung einer Beschädigung von Differentialgetrieben oder Reifen durch zu große Drehzahlunterschiede zwischen den angetriebenen Rädern einer Achse. Im Unterschied zu einer der Erfindung zugrunde liegenden Antriebsschlupfregelung besteht ein wesentliche Unterschied darin, dass mit dem bekannten Verfahren der relative Antriebsschlupf (Radgeschwindigkeitsdifferenz zwischen den Rädern der Vorderachse und der Hinterachse) zwischen angetriebenen Rädern eines Fahrzeugs auf einen vorgegebenen Wert begrenzt werden soll, während bei Antriebsschlupfregelungen jedoch der absolute Antriebsschlupf der angetriebenen Räder, d.h. der Schlupf zwischen Rad und Strasse auf einen optimalen Wert eingeregelt wird, um mit bestem Kraftschluss zwischen Rad und Fahrbahn anfahren bzw. beschleunigen zu können.

Der vorliegenden Erfindung liegt daher die Aufgabe zugrunde, ein Verfahren und eine Vorrichtung der eingangs erwähnten Art derart weiter zu entwickeln, dass eine Motordrehzahlregelung zur Antriebsschlupfregelung einfach zu realisieren ist und genau arbeitet.

Diese Aufgabe wird erfindungsgemäß durch die Merkmale von Anspruch 1 und Anspruch 3 gelöst.

Offenbarung der Erfindung

Da Antriebsschlupfregelungen (ASR) einen Schlupf und damit Raddrehzahlen regeln und diese Raddrehzahlen proportional zur Drehzahl des Antriebsmotors sind, verwendet die Erfindung anstatt des Sollantriebsmoments eine obere Grenzdrehzahl des Antriebsmotors als stellgröße. Obere Grenzdrehzahl bedeutet dabei, dass das Fahrzeug bis zu dieser Grenzdrehzahl im stabilen Bereich der Kraftschluss-Schlupfkurve bzw. im Kraftschlussmaximum betrieben wird, während bei über die obere Grenzdrehzahl hinausgehenden Drehzahlen der instabile Bereich der Kräftschluss-Schlupfkurve erreicht wird. Insofern stellt die obere Grenzdrehzahl einen Drehzahlsollwert des Antriebsmotors dar.

Der in jedem Motorsteuergerät implementierte Motordrehzahlregler kann eine Drehzahlvorgabe wesentlich schneller und genauer einregeln als durch eine Antriebsmomentvorgabe möglich ist. Die Erfindung vermeidet folglich bei der Antriebsschlupfregelung den Umweg über die Regelung des Antriebsmoments als Stellgröße, wodurch ein Regler und der für diesen Regler notwendige Applikationsaufwand zur Abstimmung des Reglerverhaltens auf das Fahrzeug bzw. den Antriebsmotor entfällt. Zur Regelung des Antriebsschlupfes kann hingegen ausschließlich der in Motorsteuergeräten ohnehin vorhandene und auf den jeweiligen Antriebsmotor abgestimmte Drehzahlregler verwendet werden. Dadurch ergibt sich eine einfachere Struktur und ein verbessertes Regelverhalten. Weiterhin wird eine gegenseitige Beeinflussung verschiedener, auf das Antriebsmoment als Stellgröße wirkender Regler vermieden. Nicht zuletzt kann der Datentransfer zur Übertragung des Signals für die maximal zulässige Motordrehzahl zwischen dem Bremssteuergerät und dem Motorsteuergerät über die bereits eingangs erwähnte CAN-Schnittstelle nach SAE J1939 erfolgen.

Zunächst wird basierend auf der momentanen Drehzahl des Antriebsmotors und der momentanen Radgeschwindigkeit das momentane Übersetzungsverhältnis berechnet. Sodann kann der obere Grenzwert für die Drehzahl des Antriebsmotors aus der Radsollgeschwindigkeit und dem momentanen Übersetzungsverhältnis berechnet werden.

Genaueres geht aus der folgenden Beschreibung eines Ausführungsbeispiels hervor.

Zeichnung

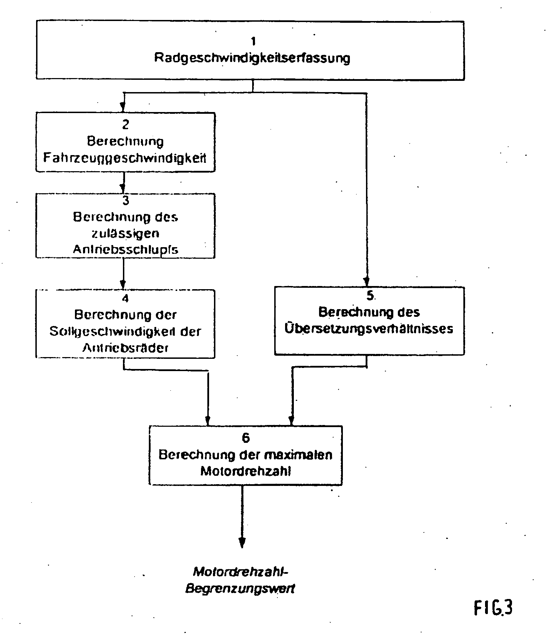

Nachstehend ist ein Ausführungsbeispiel der Erfindung in der Zeichnung dargestellt und in der nachfolgenden Beschreibung näher erläutert. In der Zeichnung zeigt Fig.3 den prinzipiellen Aufbau der Regelstruktur einer Motordrehzahlregelung innerhalb einer Antriebsschlupfregelung gemäß einer bevorzugten Ausführungsform der Erfindung.

Beschreibung des Ausführungsbeispiels

Der in Fig.1 gezeigte Regelkreis 10 zur Regelung des Antriebsmoments ist prinzipiell auch für eine Antriebsschlupfregelung ASR gemäß der Erfindung mittels Motordrehzahlregelung gültig, mit dem Unterschied, dass gemäß der Erfindung als Stellgröße des Regelkreises 10 nicht das Antriebsmoment des Antriebsmotors 12, sondern eine zulässige obere Grenzdrehzahl des Antriebsmotors 12 abhängig von dem an dem jeweiligen Antriebsrad oder an mehreren Antriebsrädern vorliegenden Schlupf herangezogen wird. Die Antriebsschlupfregelung sei innerhalb eines elektronischen Bremssystems eines Nutzfahrzeugs realisiert und beeinflusst neben dem Antriebsmotor 12 auch dessen Bremsanlage. Da letztere Funktion für die Erfindung nicht wesentlich ist, wird im folgenden hierauf nicht eingegangen.

Im einzelnen wirkt der Antriebsmotor 12 auf den Antriebsstrang 14, welcher beispielsweise aus einem Getriebe, einer Kardanwelle, einem Verteilergetriebe, den jeweiligen Antriebswellen und den einer angetriebenen Achse zugeordneten Antriebsrädern besteht. Dabei kann das Nutzfahrzeug an einer wie auch an zwei Achsen angetrieben sein. Den angetriebenen und nicht angetriebenen Rädern sind Radgeschwindigkeitssensoren zugeordnet, welche Signale für die momentane Radgeschwindigkeit in das Bremssteuergerät 16 einsteuern, in welchem beispielsweise auch Routinen für eine zusätzlich vorhandene ABS-Regelung und/oder für ein elektronisches Stabilitätsprogramm (ESP) ablaufen.

Darüber hinaus ist das Bremssteuergerät 16 mit einem integriertem Funktionsteil zur Antriebsschlupfregelung versehen, welches beispielsweise über eine CAN-Schnittstelle 18 nach SAE J1939 mit dem Motorsteuergerät 20 verbunden ist. Letzteres steuert wiederum Leistung, Drehmoment und Drehzahl des Antriebsmotors 12 und beinhaltet insbesondere einen für andere Aufgaben ohnehin vorhandenen Motordrehzahlregler.

Fig.3 zeigt den prinzipiellen Aufbau der Regelstruktur der Motordrehzahlregelung, wobei die am jeweiligen Antriebsrad vorliegende momentane Radgeschwindigkeit die Eingangsgröße darstellt, welche gemäß Funktionsblock 1 von den Radgeschwindigkeitssensoren detektiert wird. Weiterhin wird auch die momentane Motordrehzahl auf bekannte Weise gemessen.

Im Funktionsblock 5 wird aus den Radgeschwindigkeiten der Antriebsräder und der aktuellen Motordrehzahl dann das momentane Übersetzungsverhältnis i_total wie folgt berechnet :

$$\text{i\_total} = \text{n\_mot}/((\text{v\_2l} + \text{v\_2r})/2),$$

wobei

n_mot:        die momentane Motordrehzahl,

v_2r, v_2l    die momentanen Radgeschwindigkeiten der Antriebsräder einer angetriebenen Achse sind.

Diese Art der Berechnung über eine Mittelwertbildung ist auch auf mehrere angetriebene Achsen übertragbar.

Bei einem Nutzfahrzeug mit zwei angetriebenen Achsen oder vier angetriebenen Rädern gilt für das momentane Übersetzungsverhältnis i_total beispielsweise :

$$i\_total = n\_mot/(( v\_2l + v\_2r + v\_3l + v\_3r)/4),$$

wobei

n_mot : die momentane Motordrehzahl,

v_2r, v_2l. v_3l, v_3r die momentanen Radgeschwindigkeiten der Antriebsräder zweier angetriebenen Achse sind.

Die in den Blöcken 2 bis 4 durchgeführten Funktionen sind bereits aus dem Stand der Technik bekannt und betreffen die Berechnung der momentanen Fahrzeuggeschwindigkeit in Block 2, beispielsweise aus den Signalen der Raddrehzahlsensoren nicht angetriebener Achsen. Aus dieser Größe und den Raddrehzahlen der angetriebenen Räder kann dann der momentane Schlupf der Antriebsräder während eines Beschleunigungsvorgangs berechnet werden. Gemäß Block 3 wird der zulässige oder optimale Antriebsschlupf beispielsweise aus gespeicherten Kraftschluss-Schlupfkennlinien ermittelt, woraus sich auch die Sollradgeschwindigkeiten der angetriebenen Räder gemäß Block 4 ergeben.
In Block 6 wird dann schließlich aus der in Block 4 berechneten Radsollgeschwindigkeit und dem in Block 5 berechneten Übersetzungsverhältnis i_total ein oberer Grenzwert n_mot_max für die Motordrehzahl wie folgt berechnet:

$$n\_mot\_max = v\_soll * i\_total.$$

Würde der Antriebsmotor mit einer Drehzahl oberhalb des oberen Grenzwert n_mot_max betrieben, würde sich der Schlupf erhöhen und dadurch der Kraftschluss sinken, während ein Betrieb des Antriebsmotors mit demgegenüber geringeren Drehzahlen eine stabile Fahrt und mit dem oberen Grenzwert n_mot_max eine Fahrt im Kraftschlussmaximum ermöglicht. Der obere Grenzwert n_mot_max bildet folglich den Drehzahlsollwert für den im Motorsteuergerät 20 integrierten Motordrehzahlregler und wird über die CAN-Schnittstelle 18 übertragen.
Anschließend wird die Regelabweichung zwischen dem oberen Grenzwert n_mot_max und der Ist-Motordrehzahl vom Drehzahlregler 20 berechnet. Bei einer fremdgezündeten Brennkraftmaschine wird dann beispielsweise durch einen auf die Drosselklappe wirkenden Steller und bei einer selbstzündende Brennkraftmaschine durch einen auf die Dieseleinspritzpumpe wirkenden Steller der Drehzahlsollwert eingeregelt, wobei der jeweilige Steller vom Drehzahlregler 20 angesteuert wird.

Bezugszeichenliste

10 Regelkreis
12 Antriebsmotor
14 Antriebsstrang
16 Bremsteuergerät
18 Schnittstelle
20 Motorsteuergerät

**Patentansprüche**

1. Verfahren zur Regelung des Antriebsschlupfes angetriebener Räder eines Fahrzeugs zwischen den Rädern und der Fahrbahn, bei welcher basierend auf einer Erfassung der momentanen Radgeschwindigkeit und der Berechnung einer Radsollgeschwindigkeit eine Stellgröße für einen Antriebsmotor (12) des Fahrzeugs berechnet wird, wobei die Stellgröße durch einen oberen Grenzwert für die Drehzahl des Antriebsmotors (12) gebildet wird, **dadurch gekennzeichnet, dass** basierend auf der momentanen Drehzahl des Antriebsmotors (12) und der momentanen Radgeschwindigkeit das momentane Übersetzungsverhältnis und der obere Grenzwert für die Drehzahl des Antriebsmotors (12) aus der Radsollgeschwindigkeit und dem momentanen Übersetzungsverhältnis berechnet wird.

**2.** Verfahren nach Anspruch 1, **dadurch gekennzeichnet, dass** die Radsollgeschwindigkeit aus der momentanen Fahrzeuggeschwindigkeit und einem zulässigen Antriebsschlupwert berechnet wird.

**3.** Vorrichtung zur Regelung des Antriebsschlupfes angetriebener Räder eines Fahrzeugs, mit wenigstens einem Steuergerät (16), welches basierend auf einer Erfassung der momentanen Radgeschwindigkeit und der Berechnung einer Radsollgeschwindigkeit eine Stellgröße für einen Antriebsmotor (12) des Fahrzeugs berechnet, wobei die Stellgröße durch einen oberen Grenzwert für die Drehzahl des Antriebsmotors (12) gebildet wird, **dadurch gekennzeichnet, dass** das wenigstens eine Steuergerät (16) derart ausgebildet ist, dass es basierend auf der momentanen Drehzahl des Antriebsmotors (12) und der momentanen Radgeschwindigkeit das momentane Übersetzungsverhältnis und den oberen Grenzwert für die Drehzahl des Antriebsmotors (12) aus der Radsollgeschwindigkeit und dem momentanen Übersetzungsverhältnis berechnet.

**4.** Vorrichtung nach Anspruch 3, **dadurch gekennzeichnet, dass** das wenigstens eine Steuergerät (16) ein Steuergerät eines elektronischen Bremssystems (EBS) oder eines Anti-Blockiersystems (ABS) ist.

**5.** Vorrichtung nach Anspruch 4, **dadurch gekennzeichnet, dass** ein Motorsteuergerät (20) einen Drehzahlregler aufweist, welcher den Antriebsmotor (12) auf den oberen Grenzwert für die Drehzahl einregleit.

**6.** vorrichtung nach Anspruch 4 und 5, **dadurch gekennzeichnet, dass** der obere Grenzwert für die Drehzahl vom Steuergerät (16) über eine CAN-Schnittstelle (18) in das Motorsteuergerät eingesteuert wird.

**Claims**

**1.** A method for controlling the traction slip of driven wheels of a vehicle between the wheels and the carriageway, in the case of which a manipulated variable is calculated for a drive engine (12) of the vehicle on the basis of a detection of the instantaneous wheel speed and the calculation of a desired wheel speed, the manipulated variable being formed by an upper limit value for the rotational speed of the drive engine (12), **characterized in that** the instantaneous transmission ratio is calculated on the basis of the instantaneous rotational speed of the drive engine (12) and the instantaneous wheel speed, and the upper limit value for the rotational speed of the drive engine (12) is calculated from the desired wheel speed and the instantaneous transmission ratio.

**2.** The method as claimed in claim 1, **characterized in that** the desired wheel speed is calculated from the instantaneous vehicle speed and a permissible traction slip value.

**3.** A device for controlling the traction slip of driven wheels of a vehicle, having at least one control unit (16) that calculates a manipulated variable for a drive engine (12) of the vehicle on the basis of a detection of the instantaneous wheel speed and calculation of a desired wheel speed, the manipulated variable being formed by an upper limit value for the rotational speed of the drive engine (12), **characterized in that** the at least one control unit (16) is designed in such a way that it calculates the instantaneous transmission ratio on the basis of the instantaneous rotational speed of the drive engine (12) and the instantaneous wheel speed, and calculates the upper limit value for the rotational speed of the drive engine (12) from the desired wheel speed and the instantaneous transmission ratio.

**4.** The device as claimed in claim 3, **characterized in that** the at least one control unit (16) is a control unit of an electronic brake system (EBS) or of an antilock brake system (ABS).

**5.** The device as claimed in claim 4, **characterized in that** an engine control unit (20) has a rotational speed controller that regulates the drive engine (12) to the upper limit value for the rotational speed.

**6.** The device as claimed in claim 4 and 5, **characterized in that** the upper limit value for the rotational speed is fed into the engine control unit by the control unit (16) via a CAN interface (18).

**Revendications**

**1.** Procédé à régler le patinage à l'accélération des roues motrices d'un véhicule entre les roues et la voie de circulation, dans lequel une grandeur de commande est calculée pour un moteur de commande (12) du véhicule sur la base d'une détection de la vitesse instantanée de roue et du calcul d'une vitesse théorique de roue, à ladite grandeur de commande étant formée par une valeur limite supérieure du nombre de tours dudit moteur de commande (12), **caractérisé en ce que** le rapport instantané des changements de vitesse et ladite valeur limite du nombre de tours dudit moteur de commande (12) sont calculés sur la base du nombre de tours instantané dudit moteur de commande (12) et de la vitesse de roue instantanée, par dérivation de la vitesse théorique de roue et du rapport instantané des changements de vitesse.

2. Procédé selon la revendication 1, **caractérisé en ce que** la vitesse théorique de roue est calculée par dérivation de la vitesse instantanée du véhicule et d'une valeur admissible de patinage à l'accélération.

3. Dispositif à régler le patinage à l'accélération des roues motrices d'un véhicule, à au moins un dispositif de manoeuvre (16), qui, à la base d'une détection de la vitesse instantanée de roue et du calcul d'une vitesse théorique de roue, calcule une grandeur de commande pour un moteur de commande (12) du véhicule, à ladite grandeur de commande étant formée par une valeur limite supérieure du nombre de tours dudit moteur de commande (12), **caractérisé en ce que** ledit au moins un dispositif de manoeuvre (16) est configuré d'une telle façon, qu'il calcule le rapport instantané des changements de vitesse et ladite valeur limite du nombre de tours dudit moteur de commande (12) sur la base du nombre de tours instantané dudit moteur de commande (12) et de la vitesse de roue instantanée, par dérivation de la vitesse théorique de roue et du rapport instantané des changements de vitesse.

4. Dispositif selon la revendication 3, **caractérisé en ce que** ledit au moins un dispositif de manoeuvre (16) est un système de commande d'un système de freinage électronique (EBS) ou d'un système de freinage antiblocage (ABS).

5. Dispositif selon la revendication 4, **caractérisé en ce qu'**un dispositif de commande du moteur (20) comprend un régulateur de vitesse qui règle ledit moteur de commande (12) à ladite valeur limite supérieure du nombre de tours.

6. Dispositif selon les revendications 4 et 5, **caractérisé en ce que** ladite valeur limite supérieure du nombre de tours est réglée par ledit dispositif de manoeuvre (16) dans ledit dispositif de commande du moteur via une interface du type CAN.

FIG.1

FIG.2

```
┌─────────────────────────────────────────────────┐
│                       1                          │
│           Radgeschwindigkeitserfassung           │
└─────────────────────────────────────────────────┘

┌───────────────────────┐
│          2            │
│      Berechnung        │
│  Fahrzeuggeschwindigkeit│
└───────────────────────┘

┌───────────────────────┐
│          3            │
│    Berechnung des      │
│      zulässigen        │
│    Antriebsschlupfs    │
└───────────────────────┘

┌───────────────────────┐      ┌───────────────────────┐
│          4            │      │          5            │
│    Berechnung der      │      │    Berechnung des      │
│  Sollgeschwindigkeit der│      │ Übersetzungsverhältnisses│
│    Antriebsräder       │      └───────────────────────┘
└───────────────────────┘

            ┌─────────────────────────────────┐
            │               6                 │
            │  Berechnung der maximalen        │
            │       Motordrehzahl             │
            └─────────────────────────────────┘

                    Motordrehzahl-
                   Begrenzungswert
```

FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19837521 A1
- WO 0128802 A